# EUROPÄISCHE PATENTSCHRIFT

(11) **EP 3 355 424 B1**
(45) Veröffentlichungstag und Bekanntmachung des Hinweises auf die Patenterteilung: **10.03.2021**
(21) Anmeldenummer: 17305106.1
(22) Anmeldetag: 31.01.2017
(51) Int. Cl.: H02B 1/40

(54) **MONTAGEVORRICHTUNG ZUR MONTAGE EINES VERTEILERSCHRANKS**
MOUNTING DEVICE FOR MOUNTING A DISTRIBUTION CABINET
DISPOSITIF DE MONTAGE D'UNE ARMOIRE DE DISTRIBUTION

(43) Veröffentlichungstag der Anmeldung: 01.08.2018
(73) Patentinhaber: Hager Electro GmbH & Co. KG, 66440 Blieskastel (DE)
(72) Erfinder: AMENDOLA, Ettore, 57600 Oeting (FR); GERSTNER-RIEWER, Florian, 66333 Völklingen (DE); MONZON, Juan, 66125 Dudweiler (DE); TORNOS, Sergi, L'Ametlla del Vallès, 08480 Barcelona (ES); GIAMBELLUCA, Dario, 08015 Barcelona (ES)
(74) Vertreter: Cabinet Nuss

(56) Entgegenhaltungen:
- EP-A1- 1 149 545
- DE-U- 1 941 418
- DE-U1-202009 002 003
- GB-A- 785 896
- JP-A- S54 156 957

## Beschreibung

Die Erfindung betrifft eine Montagevorrichtung zur Montage eines Verteilerschranks, einen Verteilerschrank umfassend eine solche Montagevorrichtung sowie ein Verfahren zur Montage eines solchen Verteilerschranks.

Vorzugsweise umfasst der Verteilerschrank eine Rückwand, eine erste Seitenwand, eine gegenüberliegend von der ersten Seitenwand angeordnete zweite Seitenwand, eine dritte Seitenwand, eine gegenüberliegend von der dritten Seitenwand angeordnete vierte Seitenwand, eine Schranköffnung sowie eine Tür zum Schließen der Schranköffnung. Der Verteilerschrank ist vorzugsweise an einer Wand montierbar.

Solche Verteilerschränke werden in der Regel zur Unterbringung von Geräten zur Verteilung elektrischer Energie im Bereich des Niederspannungsnetzes eines Haushalts verwendet.

Solche Verteilerschränke können in der Regel mittels einer Montagevorrichtung oder einer Fixierungsvorrichtung an einer Wand montiert oder fixiert werden. Solche Montagevorrichtungen können in der Form einer Unterlegscheibe oder einer Schlitzzahnscheibe bereitgestellt werden, die in eine Aufnahmeöffnung oder Fixierungsöffnung des Verteilerschranks angeordnet werden kann, um einen geringfügigen Ausgleich zwischen der Montageposition des Verteilerschranks und der Bohrung in der Horizontalen oder Vertikalen zu erzielen und den Verteilerschrank ins Lot zu bringen. Diese Montagevorrichtungen können jedoch den Nachteil bieten, dass ein Installateur mit einer Hand den Verteilerkasten in der Montageposition halten muss und gleichzeitig die Montagevorrichtung mit seiner anderen Hand an der vorgesehenen Stelle anbringen muss, um letztendlich die Schraube, die den Verteilerschrank mittels der Montagevorrichtung an der Wand fixiert, festzuziehen. Dies ist jedoch für eine Person alleine schwer zu bewerkstelligen. Ferner ist mit einer solchen Montagevorrichtung nach dem Stand der Technik eine Ausrichtung nur bezüglich der Horizontalen oder der Vertikalen nicht jedoch in der Tiefe, das heißt in einer quer zur Wand verlaufenden Richtung möglich.

Die Offenlegungsschrift DE 1 941 418 U offenbart eine Montagevorrichtung zur Montage eines Verteilerschranks/Gerätes an einer Wand, bei der ein Ausgleich von Wandunebenheiten durch ein mit einem Außengewinde versehenen Rohrstück ermöglicht wird, das an einer Bodenplatte eine exzentrische Bohrung aufweist. Das Rohrstück ist mittels zweier Gegenmuttern an einer Bohrung des Gehäuses befestigbar. Die exzentrische Bohrung erlaubt die Positionierung der Bohrung in der Bodenplatte über einem Bohrloch in der Wand.

Die Offenlegungsschrift EP 1 149 545 A1 und die GB 785896 zeigen die Befestigung eines Verteilerschranks an einer Wand mittels um einen jeweiligen Befestigungspunkt an dem Verteilerschrank drehbar gelagerten Laschen, welche außerhalb der Seitenwände des Verteilerschranks an der Wand fixierbar sind.

Die aus dem Stand der Technik bekannten Verteilerschränke lassen sich in der Regel mittels eines Montageverfahrens an der Wand montieren, welches folgende Verfahrensschritte umfasst:
- Vorfixierung des Verteilerschranks an einer Wand durch Aufhängung des Verteilerschranks an einer zentralen Ausrichtungsöffnung mittels einer Schraube ;
- Ausrichtung des Verteilerschranks gegenüber der Horizontalen ;
- Markierung der Positionen für weitere Bohrungen in der Wand ;
- Lösen des Verteilerschranks von der Wand ;
- Bohren der Bohrungen an den markierten Stellen ;
- Endfixierung des Verteilerschranks an der Wand mittels weiterer in den weiteren Bohrungen eingebrachter Schrauben.

Bei dem Verfahren nach dem Stand der Technik kann jedoch ein fehlerhaftes Markieren der Stelle der weiteren Bohrung oder eine fehlerhaft ausgeführte weitere Bohrung zu einem schief an der Wand montierten Verteilerschrank führen oder dazu führen, dass der Verteilerschrank nicht mit der gewünschten Ausrichtung an der Wand montiert werden kann.

Ferner kann bei den aus dem Stand der Technik bekannten Montagevorrichtungen und dem aus dem Stand der Technik bekannten Verfahren zur Montage nachteilig sein, dass die Stelle der weiteren Bohrung insbesondere im Wesentlichen durch die Stelle der Schraube vorbestimmt ist. Ist an dieser vorbestimmten Stelle ein Stelle der Wand, die beispielsweise für die Anbringung einer Bohrung ungeeignet oder schlecht geeignet ist, so kann der Verteilerschrank nur schwer oder gar nicht in der gewünschten Ausrichtung montiert werden.

Es ist die Aufgabe der vorliegenden Erfindung, eine Montagevorrichtung zur Montage eines Verteilerschranks an einer Wand bereitzustellen, dass eine einfache und sichere Montage des Verteilerschranks an der Wand ermöglicht und eine zumindest zweidimensionale variable Ausrichtung des Verteilerschranks, insbesondere eine variable Ausrichtung entlang der Horizontalen und/oder der Vertikalen bezogen auf die Wand, um beispielsweise einen Toleranzausgleich der Bohrungen zu ermöglichen oder die Stelle der weiteren Bohrung bei der Montage des Verteilerschranks an der Wand freier wählen zu können.

Diese Aufgabe wird durch eine Montagevorrichtung nach Anspruch 1 gelöst.

Die Erfindungsgemäße Montagevorrichtung ist zur Montage eines Verteilerschranks, der wenigstens eine Aufnahmeöffnung zur Aufnahme der Montagevorrichtung aufweist, an einer Wand geeignet. Die Montagevorrichtung umfasst einen Hauptabschnitt mit einer Montageöffnung und einen ersten Positionierungsabschnitt.

Die Montagevorrichtung ist dadurch gekennzeichnet, dass der erste Positionierungsabschnitt geeignet ist, die Montagevorrichtung um eine im Wesentlichen quer zu einer Haupterstreckungsebene der Aufnahmeöffnung verlaufende Achse drehbar in der Aufnahmeöffnung zu halten, um zumindest ein zweidimensionales Ausrichten des Verteilerschranks an der Wand zu ermöglichen.

Diese Ausgestaltung bietet den Vorteil, dass die Montagevorrichtung und insbesondere die Montageöffnung der Montagevorrichtung in einfacher Weise durch Drehung der Montagevorrichtung um die Achse ausgerichtet werden kann bzw. einhändig durch einen Installateur ausgerichtet werden kann.

Eine zweidimensionale Ausrichtung bedeutet dabei insbesondere eine variable Ausrichtung entlang der Horizontalen und/oder der Vertikalen bezogen auf die Wand.

Vorzugsweise ist der erste Positionierungsabschnitt in der Aufnahmeöffnung aufgenommen, wenn die Montagevorrichtung eine erste Positionierungsposition einnimmt. Weiterhin vorzugsweise umfasst der erste Positionierungsabschnitt eine erste Gleitfläche, die in der ersten Positionierungsposition an einer zweiten Gleitfläche der Aufnahmeöffnung anliegt, um ein Drehen de Montagevorrichtung um die Achse herum zu ermöglichen.

Vorzugsweise umfasst der erste Positionierungsabschnitt wenigstens einen Vorsprung, der geeignet ist, an einem Randabschnitt der Aufnahmeöffnung anzuliegen, um ein Herausziehen und/oder ein versehentliches Herausfallen der Montagevorrichtung aus der Aufnahmeöffnung parallel zur Achse zu verhindern.

Diese Ausgestaltung erleichtert weiterhin das einhändige Ausrichten der Montagevorrichtung in der Aufnahmeöffnung durch den Installateur.

In einer bevorzugten Ausgestaltung umfasst die Montagevorrichtung ferner einen zweiten Positionierungsabschnitt, der mit einem Gewinde versehen ist, dass geeignet ist, derart in einen Gewindeabschnitt der Aufnahmeöffnung zu greifen, dass eine Drehbewegung der Montagevorrichtung um die Achse in eine translatorische Bewegung der Montagevorrichtung parallel zur Achse, insbesondere zur Wand hin, überführt wird, um ein Ausrichten des Verteilerschranks parallel zur Achse an der Wand zu ermöglichen.

Diese Ausgestaltung ermöglicht ein einfaches und sicheres Positionieren der Montagevorrichtung in einer quer zur Wand oder parallel zur Achse verlaufenden Richtung, um einen Ausgleich zwischen dem Verteilerschrank und der Wand zu erzielen. Somit ist die Montagevorrichtung gemäß dieser Ausgestaltung geeignet, ein dreidimensionales Ausrichten des Verteilerschranks an der Wand zu ermöglichen.

Vorzugsweise ist der zweite Positionierungsabschnitt in der Aufnahmeöffnung aufgenommen, wenn die Montagevorrichtung eine zweite Positionierungsposition einnimmt.

Gemäß der Erfindung ist die Montageöffnung als Langloch ausgebildet. Weiterhin vorzugsweise ist die Montageöffnung annähernd in der Mitte des Hauptabschnitts angeordnet.

Eine Ausgestaltung der Montageöffnung als Langloch bietet den Vorteil, dass durch ein Drehen der Montagevorrichtung, insbesondere in der ersten Positionierungsposition, die Montageöffnung in einfacher Weise mit der entsprechenden Bohrung ausgerichtet werden kann.

In einer weiteren bevorzugten Ausgestaltung umfasst die Montagevorrichtung einen Greifabschnitt, der den Hauptabschnitt umgibt.

Diese Ausgestaltung erleichtert das Angreifen der Montagevorrichtung, insbesondere das einhändige Angreifen der Montagevorrichtung durch den Installateur, insbesondere um die Montagevorrichtung anhand einer Drehbewegung zu positionieren.

Vorzugsweise umfasst die Montagevorrichtung einen Verschlussabschnitt, der an dem Hauptabschnitt und/oder dem Greifabschnitt verrastbar ist, um die Montageöffnung zu verdecken und/oder zu verschließen. Weiterhin vorzugsweise kann der Verschlussabschnitt mittels einer Lasche mit dem Hauptabschnitt und/oder dem Greifabschnitt verbunden sein.

Alternativ oder zusätzlich kann die Montagevorrichtung, insbesondere der Hauptabschnitt der Montagevorrichtung, zur Aufnahme eines Endes eines Werkzeuges einen Schlitz oder eine Vertiefung umfassen. Vorzugsweise ist die Montagevorrichtung dadurch geeignet, mittels des Werkzeugs um die Achse gedreht zu werden.

In einer bevorzugten Ausgestaltung umfasst die Montagevorrichtung eine Zentrierungsnut, die geeignet ist, einen Zentrierungskragen der Aufnahmeöffnung aufzunehmen, um die Montagevorrichtung in der Aufnahmeöffnung zu zentrieren. Vorzugsweise umgibt die Zentrierungsnut den Hauptabschnitt umlaufend.

Diese Ausgestaltung erleichtert die Anordnung der Montagevorrichtung in der Aufnahmeöffnung und bietet zudem eine Führung der Montagevorrichtung, wenn die Montagevorrichtung um die Achse gedreht wird.

Vorzugsweise weist die Zentrierungsnut eine in ein Inneres der Nut weisende Verzahnung auf, die geeignet ist, in eine Verzahnung des Zentrierungskragens zu greifen, um die Montagevorrichtung in einer Winkelposition in der Aufnahmeöffnung zu halten.

Diese Ausgestaltung ermöglicht ein schrittweises Ausrichten der Montagevorrichtung in der Aufnahmeöffnung bezüglich seiner Winkelposition, wobei jeder Schritt der Drehung bzw. Ausrichtung jeweils durch einen Zahn der Verzahnungen bestimmt ist.

Die Erfindung betrifft ferner einen Verteilerschrank zur Montage an einer Wand umfassend eine erfindungsgemäße Montagevorrichtung und wenigstens eine Aufnahmeöffnung, in welche die Montagevorrichtung aufgenommen ist.

Die Erfindung betrifft zudem ein Verfahren zur Montage eines erfindungsgemäßen Verteilerschranks an einer Wand, umfassend folgende Verfahrensschritte :
a) Einbringen einer ersten Bohrung in der Wand ;
d) Einbringen einer zweiten Bohrung in der Wand ;
e) Ausrichten der Montageöffnung der Montagevorrichtung mit der ersten Bohrung und/oder der zweiten Bohrung durch Drehen der Montagevorrichtung in der Aufnahmeöffnung ;
f) Anordnen eines zweiten Befestigungsmittels in der zweiten Bohrung und in der Montageöffnung.

Vorzugsweise umfasst das Verfahren zwischen den Verfahrensschritten a) und d) weitere folgende Verfahrensschritte :
b) Anordnen eines ersten Befestigungsmittels in der ersten Bohrung und
c) Vormontage des Verteilerschranks durch Aufhängen des Verteilerschranks an dem ersten Befestigungsmittel.

In einer bevorzugten Ausgestaltung umfasst das Verfahren zur Montage nach dem Verfahrensschritt f) folgenden weiteren Verfahrensschritt :
g) Verschließen und/oder Verdecken der Montageöffnung mittels des Verschlussabschnitts.

Vorzugsweise erfolgt in dem Verfahrensschritt d) das Einbringen der zweiten Bohrung durch die Aufnahmeöffnung des Verteilerschranks hindurch.

In einer bevorzugten Ausgestaltung umfasst in Verfahrensschritt e) das Ausrichten der Montagevorrichtung ein Anordnen des ersten Positionierungsabschnitts an der Aufnahmeöffnung und ein Drehen der Montagevorrichtung um die im Wesentlichen quer zu der Haupterstreckungsebene der Aufnahmeöffnung verlaufenden Achse, vorzugsweise ein Drehen im Uhrzeigersinn.

Weiterhin vorzugsweise umfasst das Ausrichten der Montagevorrichtung in Verfahrensschritt e) ein Anordnen des zweiten Positionierungsabschnitts an der Aufnahmeöffnung und ein Drehen der Montagevorrichtung um die im Wesentlichen quer zu der Haupterstreckungsebene der Aufnahmeöffnung verlaufenden Achse, wobei vorzugsweise ein Drehen der Montagevorrichtung entgegen des Uhrzeigersinns in eine translatorische Bewegung der Montage.

Einzelheiten und weitere Vorteile der erfindungsgemäßen Trennvorrichtung und des erfindungsgemäßen Verteilerkastens werden anhand zweier nachfolgend beschriebenen Ausführungsbeispiele erläutert. Dabei veranschaulichen im Einzelnen:
- Figuren 1a bis 1c zeigen eine Montagevorrichtung nach dem ersten Ausführungsbeispiel;
- Figur 2 zeigt eine perspektivische Ansicht eines Verteilerschranks nach dem ersten Ausführungsbeispiel;
- Figuren 3a und 3b zeigen einen Ausschnitt einer perspektivischen Ansicht des Verteilerschranks aus Figur 2;
- Figuren 4a und 4b zeigen einen Verteilerschrank nach dem ersten Ausführungsbeispiel mit einer Montagevorrichtung nach dem ersten Ausführungsbeispiel;
- Figuren 5a und 5b zeigen eine Montagevorrichtung nach einem zweiten Ausführungsbeispiel;

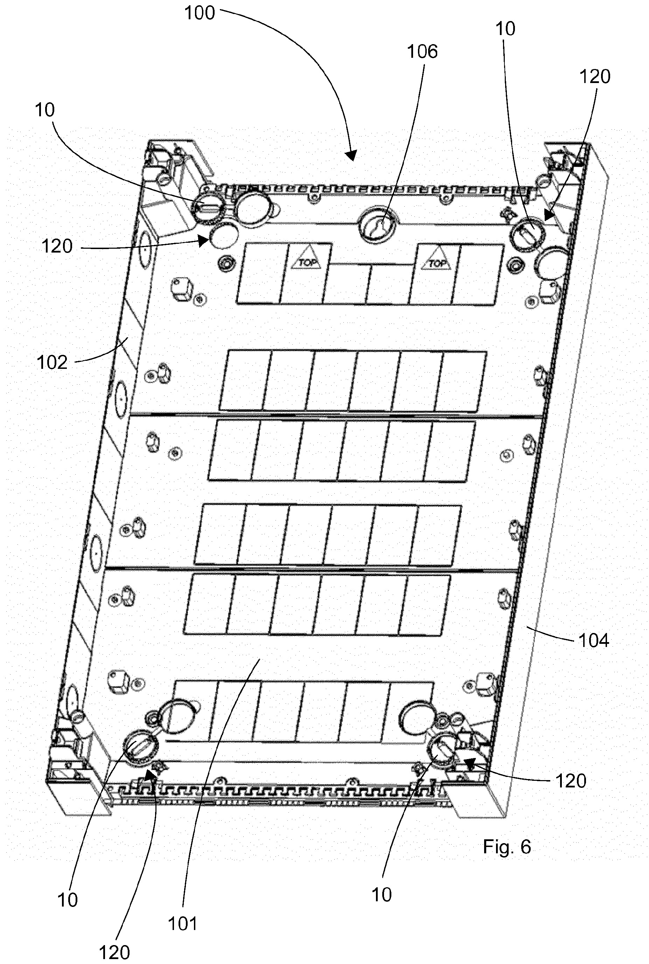

- Figur 6 zeigt eine perspektivische Ansicht eines Verteilerschranks nach dem zweiten Ausführungsbeispiel;

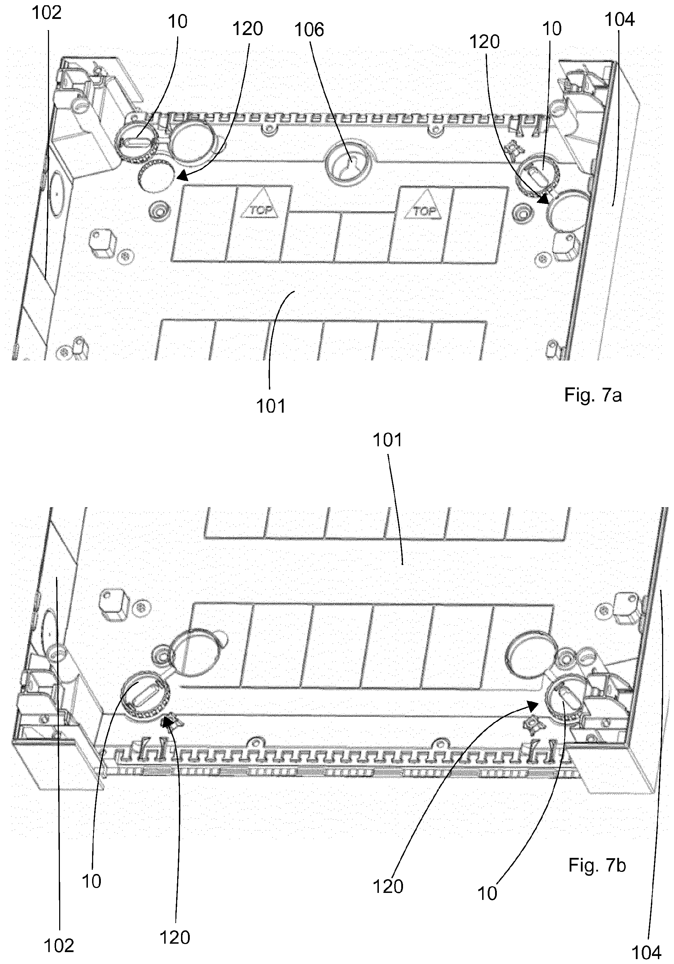

- Figuren 7a und 7b zeigen einen Ausschnitt einer perspektivischen Ansicht des Verteilerschranks aus Figur 6;
- Figur 8 zeigt einen Verteilerschrank nach dem zweiten Ausführungsbeispiel mit einer Montagevorrichtung nach dem zweiten Ausführungsbeispiel.

Die Ausführungsbeispiele betreffen eine Montagevorrichtung 10 zur Montage eines Verteilerschranks 100 an einer Wand 200. Der Verteilerschrank 100 weist wenigstens eine Aufnahmeöffnung 120 zur Aufnahme der Montagevorrichtung 10 auf.

Die Montagevorrichtung 10 umfasst einen Hauptabschnitt 20 mit einer Montageöffnung 22 und einen ersten Positionierungsabschnitt 24. Der erste Positionierungsabschnitt ist geeignet, die Montagevorrichtung 10 um eine im Wesentlichen quer zu einer Haupterstreckungsebene der Aufnahmeöffnung 120 verlaufenden Achse drehbar in der Aufnahmeöffnung 120 zu halten. Vorzugsweise verläuft die Achse auch im Wesentlichen orthogonal zur Wand 200, weiterhin vorzugsweise ist der erste Positionierungsabschnitt 24 ein einer ersten Positionierungsposition der Montagevorrichtung 10 in der Aufnahmeöffnung 120 aufgenommen.

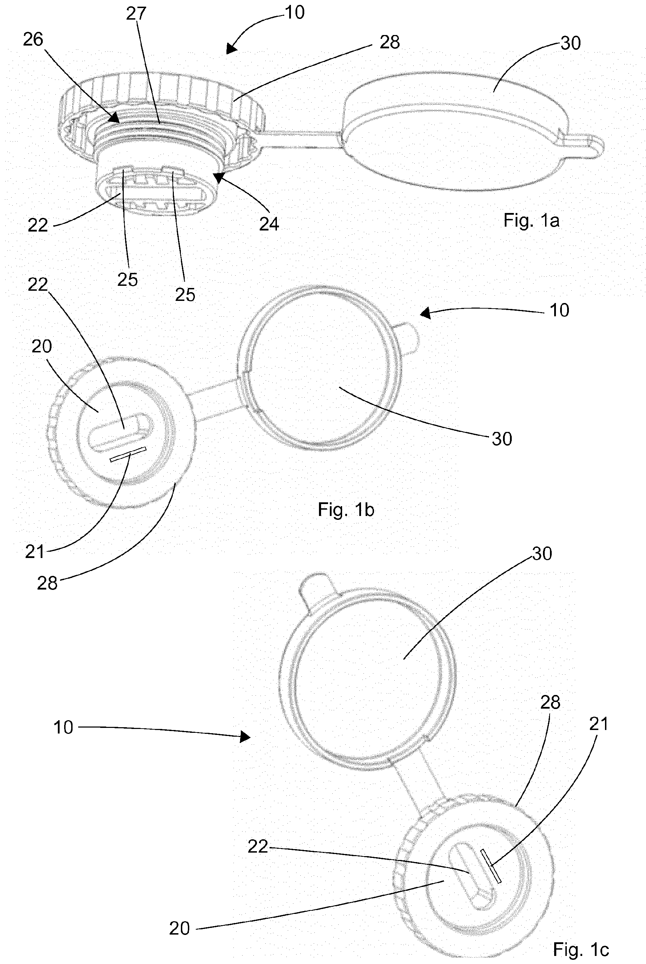

Der erste Positionierungsabschnitt 24 kann nach beiden Ausführungsbeispielen wenigstens einen Vorsprung 25 umfassen, der geeignet ist, an einem Randabschnitt 121 der Aufnahmeöffnung 120 anzuliegen, um ein Herausziehen oder ein Herausfallen der Montagevorrichtung 10 aus der Aufnahmeöffnung 120 parallel zur Achse zu verhindern. Die Montagevorrichtung 10 nach dem Ausführungsbeispiel kann einen ersten Positionierungsabschnitt 24 umfassen, der insgesamt vier Vorsprünge 25 aufweist. Diese Ausgestaltung ist insbesondere in Figuren 1a, 3b und 5a ersichtlich.

Dabei können die Vorsprünge 25 oder der Vorsprung 25 in einer quer zur Achse verlaufenden Richtung verformbar sein, um durch die Aufnahmeöffnung 120 gesteckt werden zu können und um hinter der Aufnahmeöffnung 120 ihre ursprüngliche Form anzunehmen und an den Randabschnitt 121 zur Anlage zu kommen.

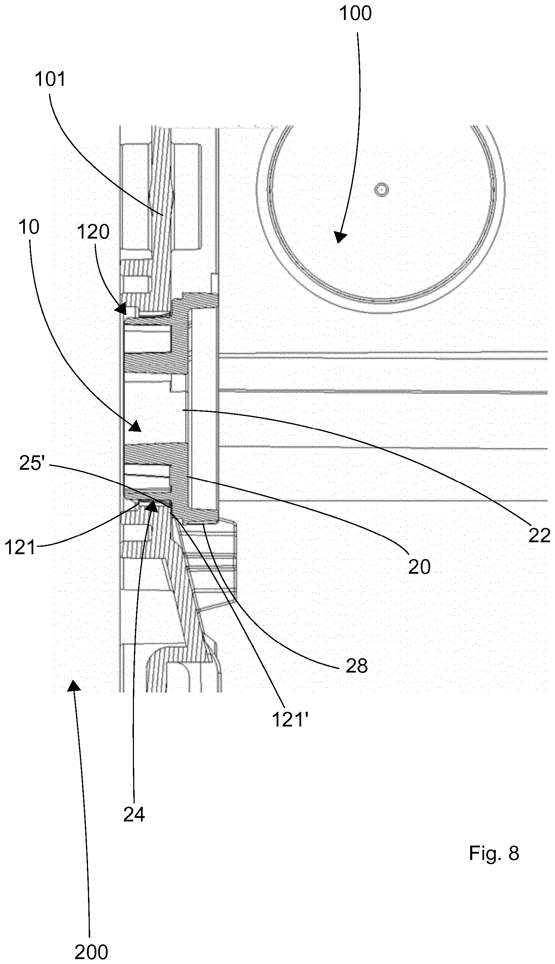

Der erste Positionierungsabschnitt 24 der Montagevorrichtung nach dem zweiten Ausführungsbeispiel kann, wie insbesondere in Figur 8 zu erkennen ist, eine Auflagefläche 25' umfassen, die an einen zweiten Randabschnitt 121' der Aufnahmeöffnung 120 in der ersten Positionierungsposition anlegbar ist.

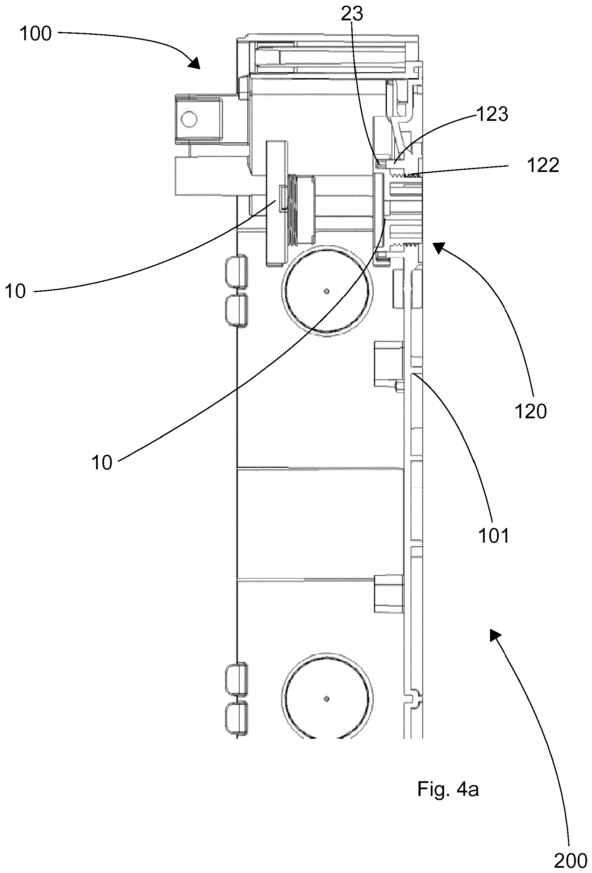

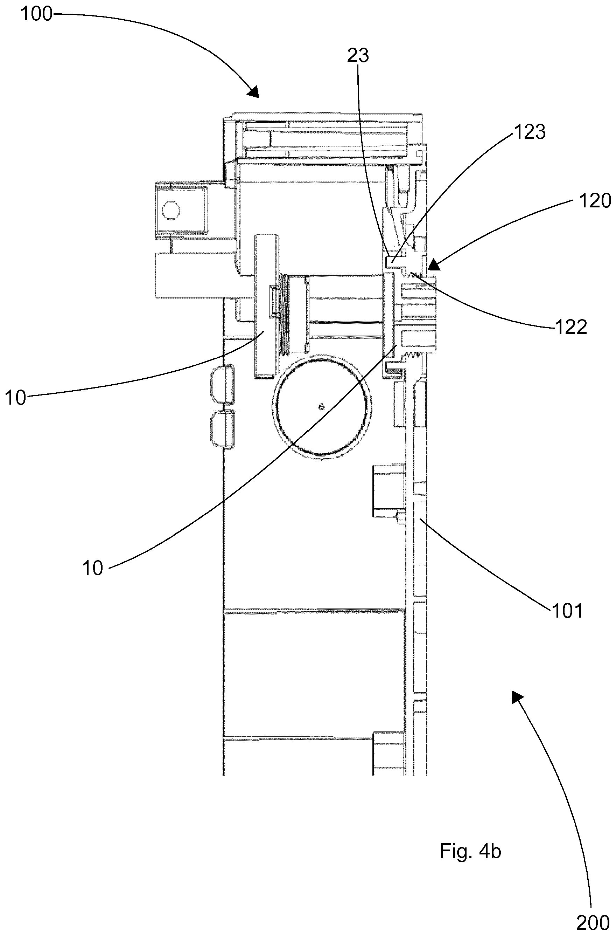

Die Montagevorrichtung 10 nach dem ersten Ausführungsbeispiel kann eine Zentrierungsnut 23 umfassen, die geeignet ist, einen Zentrierungskragen 123 der Aufnahmeöffnung 120 aufzunehmen, um die Montagevorrichtung 10 in der Aufnahmeöffnung 120 zu zentrieren und/oder um die Montagevorrichtung 10 in der Aufnahmeöffnung 120 zwischen verschiedenen Dreh- oder Winkelposition zu führen. Vorzugsweise umgibt dabei die Zentrierungsnut 23 den Hauptabschnitt 20 umlaufend. Diese Ausgestaltung ist insbesondere in Figuren 4a und 4b zu erkennen.

Die Zentrierungsnut 23 kann eine in ein Inneres der Nut weisende Verzahnung aufweisen, die geeignet ist, in eine Verzahnung des Zentrierungskragens 123 zu greifen, um die Montagevorrichtung 10 in einer Winkelposition oder Drehposition in der Aufnahmeöffnung 120 zu halten.

Die Montagevorrichtung 10 nach beiden Ausführungsbeispielen kann, wie beispielsweise in den Figuren 4a und 8 wiedergegeben, die erste Positionierungsposition einnehmen, in welcher der Positionierungsabschnitt 24 derart in der Aufnahmeöffnung 120 aufgenommen ist, dass die Montagevorrichtung 10 um die Achse herum drehbar in der Aufnahmeöffnung gehalten ist.

Die Montagevorrichtung 10 nach dem ersten Ausführungsbeispiel kann ferner einen zweiten Positionierungsabschnitt 26 umfassen, der mit einem Gewinde 27 versehen ist, das geeignet ist, derart in einen Gewindeabschnitt 122 der Aufnahmeöffnung 120 zu greifen, das eine Drehbewegung der Montagevorrichtung 10 um die Achse in eine translatorische Bewegung der Montagevorrichtung 10 parallel zur Achse überführt wird, insbesondere eine Drehbewegung im Uhrzeigersinn oder entgegen des Uhrzeigesinns.

Die Montagevorrichtung 10 kann, wie beispielsweise in Figur 4b wiedergegeben, eine zweite Positionierungsposition einnehmen, in welcher der zweite Positionierungsabschnitt in der Aufnahmeöffnung 120 aufgenommen ist, sodass das Gewinde 27 in dem Gewindeabschnitt 122 der Aufnahmeöffnung 120 greift, wodurch eine Drehbewegung der Montagevorrichtung 10 um die Achse in eine translatorische Bewegung der Montagevorrichtung 10 parallel zur Achse überführt wird. Vorzugsweise wird eine Drehbewegung der Montagevorrichtung 10 im oder entgegen des Uhrzeigersinns in eine translatorische Bewegung zur Wand 200 hin überführt.

Vorzugsweise umfasst die Montagevorrichtung 10 nach beiden Ausführungsbeispielen einen Greifabschnitt 28, der den Hauptabschnitt 20 umgibt. Alternativ oder zusätzlich kann die Montagevorrichtung 10, insbesondere der Hauptabschnitt 20 der Montagevorrichtung 10, zur Aufnahme eines Endes eines Werkzeuges einen Schlitz 21 umfassen. Vorzugsweise ist die Montagevorrichtung 10 dadurch geeignet, mittels des Werkzeugs um die Achse gedreht zu werden.

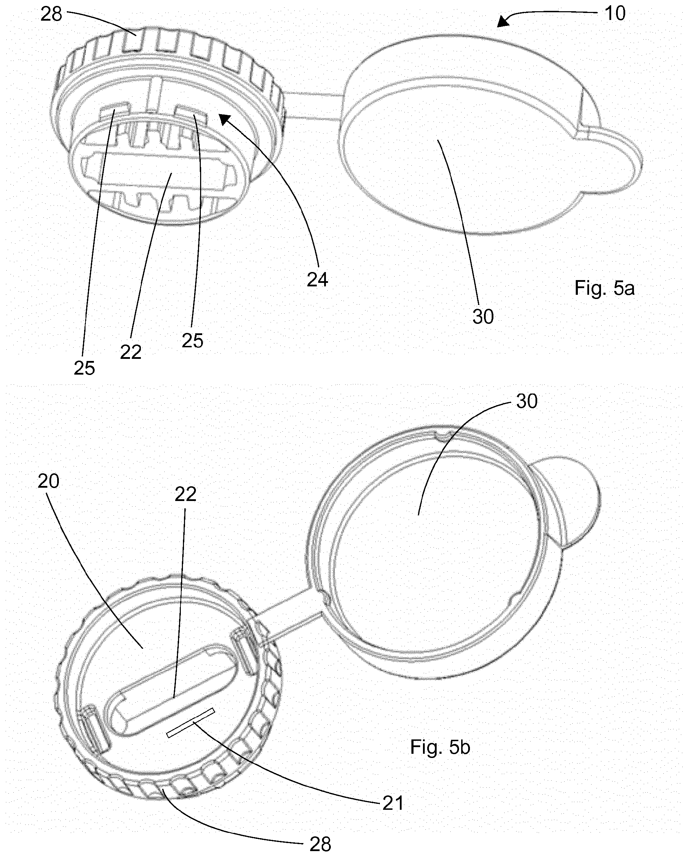

Weiterhin vorzugsweise umfasst die Montagevorrichtung 10 einen Verschlussabschnitt 30, der an dem Hauptabschnitt 20 und/oder dem Greifabschnitt 28 verrastbar ist, um die Montageöffnung 22 zu verdecken und/oder zu verschließen. Dabei kann der Verschlussabschnitt 30 insbesondere mittels eines flexiblen Stegs 31 mit dem Greifabschnitt 28 und/oder dem Hauptabschnitt 20 verbunden sein, um ein versehentliches Abhandenkommen des Verschlussabschnitts 30 zu verhindern. Diese Ausgestaltung ist insbesondere in den Figuren 1a bis 1c, 5a und 5b zu erkennen.

Die Montagevorrichtung 10 nach dem ersten Ausführungsbeispiel kann von der ersten Positionierungsposition in die zweite Positionierungsposition überführt werden, indem die Montagevorrichtung 10 entgegen des Uhrzeigersinns gedreht wird, bis das Gewinde 27 in dem Gewindeabschnitt 122 greift.

Die Montagevorrichtung 10 nach beiden Ausführungsbeispielen kann aus Kunststoff hergestellt sein, beispielsweise mittels eines Spritzgussverfahrens. Die Montagevorrichtung 10 umfasst eine als Langloch ausgebildete Montageöffnung 22. Vorzugsweise ist die Montageöffnung 22 annähernd mittig auf dem Hauptabschnitt 20 angeordnet. Vorzugsweise ist der Hauptabschnitt 20 annähern flächig ausgebildet und erstreckt sich im Wesentlichen in einer Ebene, die orthogonal zur Achse verläuft. Dies ist insbesondere aus den Figuren 1a bis 1c, 5a und 5b ersichtlich.

Der Greifabschnitt 28, kann, wie insbesondere in den Figuren 1a bis 1c, zu erkennen ist, kragenförmig ausgebildet sein und den Hauptabschnitt 20 umgeben. Der Greifabschnitt 28 kann mit einzelnen Vertiefungen ausgebildet sein, um ein Greifen des Greifabschnitts 28 durch die Hand eines Installateurs zu erleichtern.

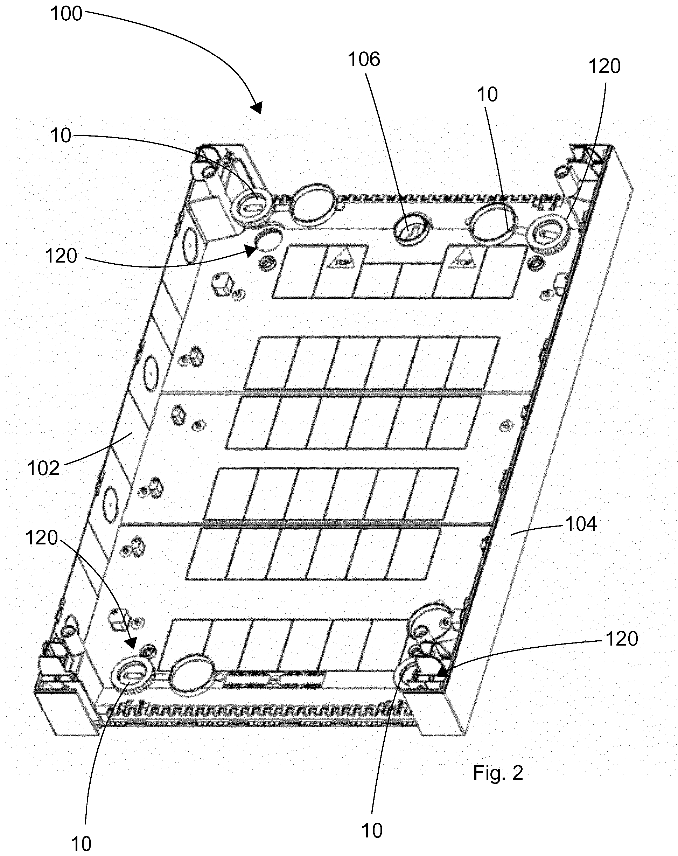

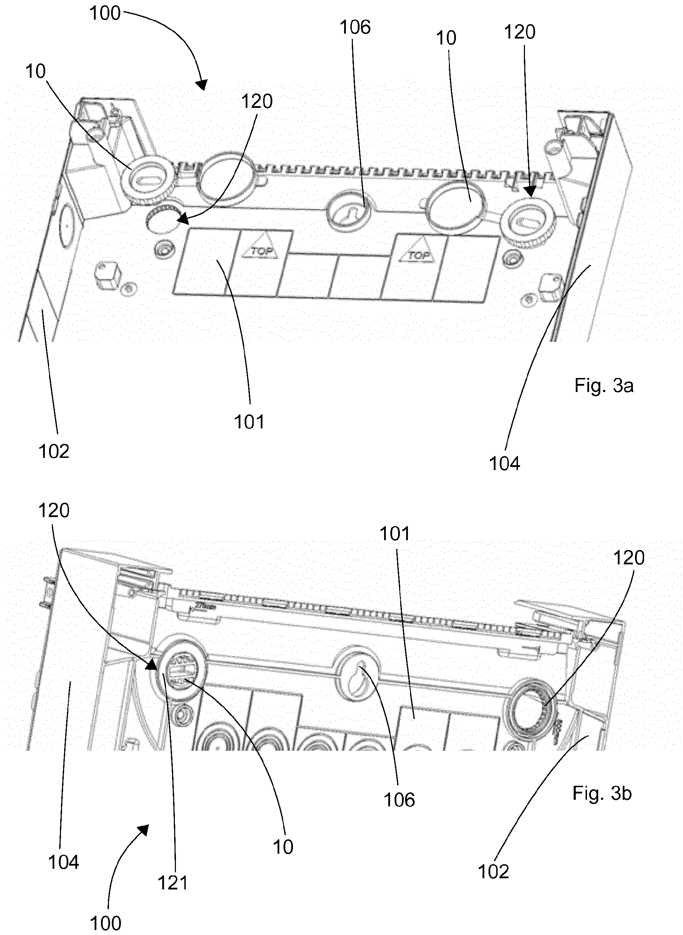

Der Verteilerschrank nach dem Ausführungsbeispiel ist insbesondere in den Figuren 2, 3a und 3b wiedergegeben. Der Verteilerschrank 100 umfasst wenigstens eine Aufnahmeöffnung 120 zur Aufnahme der Montagevorrichtung 10. Der Verteilerschrank 100 kann eine Rückwand 101 und sich jeweils orthogonal von der Rückwand 101 erstreckende erste Seitenwand 102 und zweite Seitenwand 104 umfassen. Vorzugsweise ist die wenigstens eine Aufnahmeöffnung 120 in der Rückwand 101 angeordnet. Der Verteilerschrank 100 kann ferner mit einer Vormontageöffnung 106 versehen sein, die vorzugsweise bezüglich der Horizontalen mittig in der Rückwand 101 angeordnet ist.

Wie insbesondere Figur 3b zeigt, kann die Aufnahmeöffnung 120 von einem Randabschnitt 121 umgeben sein, und zwar vorzugsweise an einer der Wand 200 zugewandten Seite der Rückwand 101.

Die Aufnahmeöffnung 120 kann vorzugsweise innenseitig einen Gewindeabschnitt 122 umfassen, der mit dem Gewinde 27 des zweiten Positionierungsabschnitt 26 zusammenwirkt, um eine Drehbewegung der Montagevorrichtung 10 um die Achse in eine translatorische Bewegung der Montagevorrichtung 10 parallel zur Achse zu überführen.

Wie insbesondere die Figuren 4a und 4b zu erkennen geben, kann die Aufnahmeöffnung 120 des Verteilerschranks 100 nach dem ersten Ausführungsbeispiel einen Zentrierungskragen 123 umfassen, der in die Zentrierungsnut 23 der Montagevorrichtung 10 aufnehmbar ist, um die Montagevorrichtung 10 in der Aufnahmeöffnung 120 zu zentrieren. Der Zentrierungskragen 123 kann eine Verzahnung umfassen, die in die Verzahnung der Zentrierungsnut 23 eingreift, um die Montagevorrichtung 10 in einer Winkelposition in der Aufnahmeöffnung 120 zu halten. Die Verzahnung des Zentrierungskragens ist dabei insbesondere in Figur 3b zu erkennen. Die Verzahnung der Zentrierungsnut ist insbesondere in Figur 1a zu erkennen.

Der Verteilerschrank 100 nach beiden Ausführungsbeispielen kann mittels einer Montagevorrichtung 10 und anhand eines Verfahrens zur Montage des Verteilerschranks 100 an der Wand 200 montiert werden. Das Verfahren zur Montage umfasst dabei folgende Verfahrensschritte :
a) Einbringen einer ersten Bohrung in der Wand 200 ;
d) Einbringen einer zweiten Bohrung in der Wand 200 ;
e) Ausrichten der Montageöffnung 22 der Montagevorrichtung 10 mit der ersten Bohrung oder der zweiten Bohrung durch Drehen der Montagevorrichtung 10 in der Aufnahmeöffnung 120 und
f) Anordnen eines zweiten Befestigungsmittels in der ersten Bohrung und/oder der zweiten Bohrung und der Montageöffnung 22.

Ausrichten der Montageöffnung 22 in der Montagevorrichtung 10 bedeutet dabei die Montageöffnung 22 fluchtend mit der zweiten Bohrung auszurichten. Das Anordnen eines zweiten Befestigungsmittels in der zweiten Bohrung und der Montageöffnung 22 kann vorzugsweise durch zumindest teilweise Hindurchführen des zweiten Befestigungsmittels durch die Montageöffnung 22 und teilweises Einführen des zweiten Befestigungsmittels in der zweiten Bohrung erfolgen. Vorzugsweise umfasst das erste Befestigungsmittel und/oder das zweite Befestigungsmittel eine Schraube.

Vorzugsweise kann das Verfahren zur Montage zwischen den Verfahrensschritten a) und d) weitere folgende Verfahrensschritte umfassen
b) Anordnen eines ersten Befestigungsmittels in der ersten Bohrung und ;
c) Vormontage des Verteilerschranks 100 durch Aufhängen des Verteilerschranks 100 an dem ersten Befestigungsmittel.

Vorzugsweise erfolgt in Schritt c) die Vormontage des Verteilerschranks durch Aufhängen des Verteilerschranks mit der Vormontageöffnung 106 an dem ersten Befestigungsmittel.

Vorzugsweise umfasst das Verfahren zur Montage nach dem Verfahrensschritt f) weiteren folgenden Verfahrensschritt:
g) Verschließen und/oder Verdecken der Montageöffnung 22 mittels des Verschlussabschnitts 30.
In einer bevorzugten Ausgestaltung kann das Verfahren zur Montage vor Verfahrensschritt a) einen weiteren Verfahrensschritt aufweisen:
- Markieren einer Stelle für die erste Bohrung und/oder Markieren einer Stelle für die zweite Bohrung.

In Verfahrensschritt d) kann das Einbringen der zweiten Bohrung durch die Aufnahmeöffnung 120 des Verteilerschranks 100 hindurch erfolgen. Das heißt, das die Bohrung beispielsweise mittels eines Bohrers in die Wand 200 eingebracht werden kann, indem der Bohrer durch die Aufnahmeöffnung 120 des Verteilerschranks 100 hindurchgeführt wird.

In einer bevorzugten Ausgestaltung des Verfahrens zur Montage kann in Verfahrensschritt e) das Ausrichten der Montagevorrichtung 10 ein Anordnen des ersten Positionierungsabschnitts 24 an der Aufnahmeöffnung 120 und ein Drehen der Montagevorrichtung 10 um die im Wesentlichen quer zu der Haupterstreckungsebene in der Aufnahmeöffnung 120 verlaufenden Achse umfassen, insbesondere ein Drehen im Uhrzeigersinn. Alternativ oder zusätzlich kann in Verfahrensschritt e) das Ausrichten der Montagevorrichtung 10 ein Anordnen des zweiten Positionierungsabschnitts 26 an der Aufnahmeöffnung 120 und ein Drehen der Montagevorrichtung 10 um die im Wesentlichen quer zu der Haupterstreckungsebene der Aufnahmeöffnung 120 verlaufende Achse umfassen.

In einer bevorzugten Ausgestaltung kann der Verschlussabschnitt 30 mit dem Hauptabschnitt 20 und/oder dem Greifabschnitt 28 mittels eines Stegs 31 verbunden sein.

## Patentansprüche

1. Verteilerschrank zur Montage an einer Wand (200) umfassend wenigstens eine Montagevorrichtung (10) zur Montage des Verteilerschranks (100) an der Wand (200),
wobei die Montagevorrichtung (10) einen Hauptabschnitt (20) mit einer Montageöffnung (22) und einen ersten Positionierungsabschnitt (24) umfasst,
**dadurch gekennzeichnet, dass** der Verteilerschrank (100) wenigstens eine Aufnahmeöffnung (120) aufweist, in welcher der Hauptabschnitt (20) und der erste Positionierungsabschnitt (24) aufgenommen sind,
wobei der erste Positionierungsabschnitt (24) die Montagevorrichtung (10) um eine im Wesentlichen quer zu einer Haupterstreckungsebene der Aufnahmeöffnung (120) verlaufene Achse drehbar in der Aufnahmeöffnung (120) hält, um zumindest ein zweidimensionales Ausrichten des Verteilerschranks (200) an der Wand zu ermöglichen,
wobei die Montageöffnung (22) als Langloch ausgebildet ist.

2. Verteilerschrank nach Anspruch 1, **dadurch gekennzeichnet, dass** der erste Positionierungsabschnitt (24) wenigstens einen Vorsprung (25) umfasst, der geeignet ist, an einem Randabschnitt (121) der Aufnahmeöffnung (120) anzuliegen, um ein Herausziehen der Montagevorrichtung (10) aus der Aufnahmeöffnung (120) parallel zur Achse zu verhindern.

3. Verteilerschrank nach einem der Ansprüche 1 oder 2, **dadurch gekennzeichnet, dass** die Aufnahmeöffnung (120) einen Gewindeabschnitt (122) umfasst und die Montagevorrichtung (10) einen zweiten Positionierungsabschnitt (26) aufweist, der mit einem Gewinde (27) versehen ist, das derart in den Gewindeabschnitt (122) greift, dass eine Drehbewegung der Montagevorrichtung (10) um die Achse in eine translatorische Bewegung der Montagevorrichtung (10) parallel zur Achse, insbesondere zur Wand (200) hin, überführt wird, um ein Ausrichten des Verteilerschranks (100) parallel zur Achse an der Wand (200) zu ermöglichen.

4. Verteilerschrank nach einem der Ansprüche 1 bis 3, **gekennzeichnet durch** einen Greifabschnitt (28), der den Hauptabschnitt (20) umgibt.

5. Verteilerschrank nach einem der Ansprüche 1 bis 4, **dadurch gekennzeichnet, dass** die Montagevorrichtung (10) **einen** Verschlussabschnitt (30) umfasst, der an dem Hauptabschnitt (20) und/oder dem Greifabschnitt (28) verrastbar ist, um die Montageöffnung (22) zu verdecken und/oder zu verschließen.

6. Verteilerschrank nach einem der Ansprüche 1 bis 5, **dadurch gekennzeichnet, dass** die Aufnahmeöffnung (120) einen Zentrierungskragen (123) aufweist und die Montagevorrichtung (10) eine Zentrierungsnut (23) umfasst, die den Zentrierungskragen (123) aufnimmt, um die Montagevorrichtung (10) in der Aufnahmeöffnung (120) zu zentrieren, wobei vorzugsweise die Zentrierungsnut (23) den Hauptanschnitt (20) umlaufend umgibt.

7. Verteilerschrank nach Anspruch 6, **dadurch gekennzeichnet, dass** der Zentrierungskragen (123) eine Verzahnung umfasst und die Zentrierungsnut (23) eine in ein Inneres der Nut weisende Verzahnung aufweist, die in die Verzahnung des Zentrierungskragens (123) greift, um die Montagevorrichtung (10) in einer Winkelposition in der Aufnahmeöffnung (120) zu halten.

8. Verfahren zur Montage eines Verteilerschranks (100) nach einem der Ansprüche 1 bis 7 an einer Wand (200), umfassend folgende Verfahrensschritte:
a) Einbringen einer ersten Bohrung in der Wand (200);
d) Einbringen einer zweiten Bohrung in der Wand (200);
e) Ausrichten der Montageöffnung (22) der Montagevorrichtung (10) mit der ersten Bohrung und/oder der zweiten Bohrung durch Drehen der Montagevorrichtung (10) in der Aufnahmeöffnung (120);
f) Anordnen eines zweiten Befestigungsmittels in der ersten Bohrung und/oder der zweiten Bohrung sowie in der Montageöffnung (22).

9. Verfahren zur Montage nach Anspruch 8, **dadurch gekennzeichnet, dass** das Verfahren zwischen den Verfahrensschritten a) und d) weitere folgenden Verfahrensschritte umfasst:
b) Anordnen eines ersten Befestigungsmittels in der ersten Bohrung und
c) Vormontage des Verteilerschranks (100) durch Aufhängen des Verteilerschranks (100) an dem ersten Befestigungsmittel.

10. Verfahren zur Montage nach einem der Ansprüche 8 oder 9, **dadurch gekennzeichnet, dass** das Verfahren nach dem Verfahrensschritt f) weiteren folgenden Verfahrensschritt umfasst:
g) Verschließen und/oder Verdecken der Montageöffnung mittels des Verschlussabschnitts.

11. Verfahren zur Montage nach einem der Ansprüche 8 bis 10, **dadurch gekennzeichnet, dass** in Verfahrensschritt d) das Einbringen der zweiten Bohrung durch die Aufnahmeöffnung (120) des Verteilerschranks (100) hindurch erfolgt.

12. Verfahren zur Montage nach einem der Ansprüche 8 bis 11, **dadurch gekennzeichnet, dass** in Verfahrensschritt e) das Ausrichten der Montagevorrichtung (10) ein Anordnen des ersten Positionierungsabschnitts (24) an der Aufnahmeöffnung (120) und ein Drehen der Montagevorrichtung (10) um die im Wesentlichen quer zu der Haupterstreckungsebene der Aufnahmeöffnung (120) verlaufenden Achse sowie vorzugsweise ein Anordnen des zweiten Positionierungsabschnitts (26) an der Aufnahmeöffnung (120) und ein Drehen der Montagevorrichtung (10) um die im Wesentlichen quer zu der Haupterstreckungsebene der Aufnahmeöffnung (120) verlaufenden Achse umfasst.

## Claims

1. Distribution cabinet for mounting on a wall (200), comprising at least one mounting device (10) for mounting the distribution cabinet (100) on the wall (200);
wherein the mounting device (10) comprises a main portion (20) having a mounting opening (22), and a first positioning portion (24),
**characterized in that**
the distribution cabinet (100) has at least one receptacle opening (120) in which the main portion (20) and the first positioning portion (24) are received;
wherein the first positioning portion (24) holds the mounting device (10) in the receptacle opening (120) so as to be rotatable about an axis that runs so as to be substantially transverse to a plane of main extent of the receptacle opening (120), so as to enable the distribution cabinet (100) to be aligned in at least two dimensions on the wall;
wherein the mounting opening (22) is configured as a slot.

2. Distribution cabinet according to Claim 1, **characterized in that** the first positioning portion (24) comprises at least one protrusion (25) which is suitable for bearing on a peripheral portion (121) of the receptacle opening (120) so as to prevent the mounting device (10) being extracted from the receptacle opening (120) in a manner parallel to the axis.

3. Distribution cabinet according to one of Claims 1 or 2, **characterized in that** the receptacle opening (120) comprises a threaded portion (122), and the mounting device (10) has a second positioning portion (26) which is provided with a thread (27) that engages in the threaded portion (122) in such a manner that a rotating movement of the mounting device (10) about the axis is converted to a translatory movement of the mounting device (10) in a manner parallel to the axis, in particular towards the wall (200), so as to as to enable the distribution cabinet (100) to be aligned on the wall (200) in a manner parallel to the axis.

4. Distribution cabinet according to one of Claims 1 to 3, **characterized by** a grip portion (28) which surrounds the main portion (20).

5. Distribution cabinet according to one of Claims 1 to 4, **characterized in that** the mounting device (10) comprises a closure portion (30) which is able to be latched to the main portion (20) and/or the grip portion (28) so as to cover and/or close the mounting opening (22).

6. Distribution cabinet according to one of Claims 1 to 5, **characterized in that** the receptacle opening (120) has a centring collar (123), and the mounting device (10) comprises a centring groove (23) which receives the centring collar (123) so as to centre the mounting device (10) in the receptacle opening (120), wherein the centring groove (23) preferably surrounds the main portion (20) in an encircling manner.

7. Distribution cabinet according to Claim 6, **characterized in that** the centring collar (123) comprises a toothing, and the centring groove (23) has a toothing that points toward an interior of the groove and engages in the toothing of the centring collar (123) so as to hold the mounting device (10) in an angular position in the receptacle opening (120).

8. Method for mounting a distribution cabinet (100) according to one of preceding Claims 1 to 7 on a wall (200), comprising the following method steps:
a) incorporating a first bore in the wall (200);
d) incorporating a second bore in the wall (200);
e) aligning the mounting opening (22) of the mounting device (10) with the first bore and/or the second bore by rotating the mounting device (10) in the receptacle opening (120);
f) disposing a second fastening means in the first bore and/or the second bore as well as in the mounting opening (22).

9. Method for mounting according to Claim 8, **characterized in that** the method between method steps a) and d) comprises the following further method steps:
b) disposing a first fastening means in the first bore; and
c) pre-mounting the distribution cabinet (100) by hanging the distribution cabinet (100) on the first fastening means.

10. Method for mounting according to one of Claims 8 or 9, **characterized in that** the method after method step f) comprises the following further method step:
g) closing and/or covering the mounting opening by means of the closure portion.

11. Method for mounting according to one of Claims 8 to 10, **characterized in that** the incorporating of the second bore in method step d) is performed through the receptacle opening (120) of the distribution cabinet (100).

12. Method for mounting according to one of Claims 8 to 11, **characterized in that** the aligning of the mounting device (10) in method step e) comprises disposing the first positioning portion (24) on the receptacle opening (120), and rotating the mounting device (10) about the axis that runs so as to be substantially transverse to the plane of main extent of the receptacle opening (120), and preferably disposing the second positioning portion (26) on the receptacle opening (120) and rotating the mounting device (10) about the axis that runs so as to be substantially transverse to the plane of main extent of the receptacle opening (120) .

## Revendications

1. Armoire de distribution destinée à être montée sur une paroi (200), comportant au moins un dispositif de montage (10) servant au montage de l'armoire de distribution (100) sur la paroi (200),
dans laquelle le dispositif de montage (10) comporte une partie principale (20) dotée d'une ouverture de montage (22) et une première partie de positionnement (24),
**caractérisée en ce que**
l'armoire de distribution (100) comprend au moins une ouverture de réception (120) dans laquelle la partie principale (20) et la première partie de positionnement (24) sont reçues,
la première partie de positionnement (24) retenant le dispositif de montage (10) dans l'ouverture de réception (120) de manière rotative autour d'un axe s'étendant sensiblement transversalement à un plan d'étendue principal de l'ouverture de réception (120), afin de permettre au moins une orientation bidimensionnelle de l'armoire de distribution (100) sur la paroi,
l'ouverture de montage (22) étant réalisée sous forme de trou oblong.

2. Armoire de distribution selon la revendication 1, **caractérisée en ce que** la première partie de positionnement (24) comporte au moins une saillie (25) qui est appropriée à s'appuyer contre une partie de bord (121) de l'ouverture de réception (120), afin d'empêcher une sortie du dispositif de montage (10) hors de l'ouverture de réception (120) parallèlement à l'axe.

3. Armoire de distribution selon l'une des revendications 1 ou 2, **caractérisée en ce que** l'ouverture de réception (120) comprend une partie filetée (122) et le dispositif de montage (10) comprend une deuxième partie de positionnement (26) qui est dotée d'un filetage (27) qui vient en prise dans la partie filetée (122) de telle sorte qu'un mouvement de rotation du dispositif de montage (10) autour de l'axe soit transformé en un mouvement de translation du dispositif de montage (10) parallèlement à l'axe, en particulier en direction de la paroi (200), afin de permettre une orientation de l'armoire de distribution (100) parallèlement à l'axe sur la paroi (200).

4. Armoire de distribution selon l'une des revendications 1 à 3, **caractérisée par** une partie de préhension (28) qui entoure la partie principale (20).

5. Armoire de distribution selon l'une des revendications 1 à 4, **caractérisée en ce que** le dispositif de montage (10) comporte une partie de fermeture (30) qui peut être encliquetée sur la partie principale (20) et/ou la partie de préhension (28), afin de recouvrir et/ou de fermer l'ouverture de montage (22).

6. Armoire de distribution selon l'une des revendications 1 à 5, **caractérisée en ce que** l'ouverture de réception (120) comprend un rebord de centrage (123) et le dispositif de montage (10) comporte une rainure de centrage (23) qui reçoit le rebord de centrage (123), afin de centrer le dispositif de montage (10) dans l'ouverture de réception (120), la rainure de centrage (23) entourant de préférence de manière périphérique la partie principale (20).

7. Armoire de distribution selon la revendication 6, **caractérisée en ce que** le rebord de centrage (123) comporte une denture et la rainure de centrage (23) comprend une denture tournée vers l'intérieur de la rainure et qui vient en prise dans la denture du rebord de centrage (123), afin de retenir le dispositif de montage (10) dans une position angulaire dans l'ouverture de réception (120).

8. Procédé de montage d'une armoire de distribution (100) selon l'une des revendications 1 à 7 sur une paroi (200), comportant les étapes de procédé suivantes :
a) introduction d'un premier alésage dans la paroi (200) ;
d) introduction d'un deuxième alésage dans la paroi (200) ;
e) orientation de l'ouverture de montage (22) du dispositif de montage (10) avec le premier alésage et/ou le deuxième alésage par rotation du dispositif de montage (10) dans l'ouverture de réception (120) ;
f) agencement d'un deuxième moyen de fixation dans le premier alésage et/ou le deuxième alésage ainsi que dans l'ouverture de montage (22).

9. Procédé de montage selon la revendication 8, **caractérisé en ce que** le procédé comporte, entre les étapes de procédé a) et d), d'autres étapes de procédé suivantes :
b) agencement d'un premier moyen de fixation dans le premier alésage et
c) prémontage de l'armoire de distribution (100) en suspendant l'armoire de distribution (100) au premier moyen de fixation.

10. Procédé de montage selon l'une des revendications 8 ou 9, **caractérisé en ce que** le procédé comporte, après l'étape de procédé f), d'autres étapes de procédé suivantes :
g) fermeture et/ou recouvrement de l'ouverture de montage au moyen de la partie de fermeture.

11. Procédé de montage selon l'une des revendications 8 à 10, **caractérisé en ce que**, dans l'étape de procédé d), l'introduction du deuxième alésage est effectuée à travers l'ouverture de réception (120) de l'armoire de distribution (100).

12. Procédé de montage selon l'une des revendications 8 à 11, **caractérisé en ce que**, dans l'étape de procédé e), l'orientation du dispositif de montage (10) comporte un agencement de la première partie de positionnement (24) au niveau de l'ouverture de réception (120) et une rotation du dispositif de montage (10) autour de l'axe s'étendant sensiblement transversalement au plan d'étendue principal de l'ouverture de réception (120) ainsi que de préférence un agencement de la deuxième partie de positionnement (26) au niveau de l'ouverture de réception (120) et une rotation du dispositif de montage (10) autour de l'axe s'étendant sensiblement transversalement au plan d'étendue principal de l'ouverture de réception (120).
